# EUROPÄISCHE PATENTSCHRIFT

(11) **EP 1 610 516 B1**
(45) Veröffentlichungstag und Bekanntmachung des Hinweises auf die Patenterteilung: **09.07.2008**
(21) Anmeldenummer: 04014681.3
(22) Anmeldetag: 23.06.2004
(51) Int. Cl.: H04L 29/06, H04L 12/18

(54) **Verfahren und Vorrichtungen zur Verbreitung einer Nachricht über ein Broadcast-Netz**
Methods and apparatuses for distributing a message across a broadcast network
Méthodes et dispositifs pour distribuer un message à travers un réseau de diffusion

(43) Veröffentlichungstag der Anmeldung: 28.12.2005
(73) Patentinhaber: e Message, Wireless Information Services Deutschland GmbH, 10119 Berlin (DE)
(72) Erfinder: Hofmann, Carsten, 12357 Berlin (DE)
(74) Vertreter: Durm, Frank

(56) Entgegenhaltungen:
- US-A1- 2004 064 688
- 3GPP SA3: "Security of Multimedia Broadcast / Multicast Service (Release 6), TS 33.246 V.1.2.0" 3GPP TECHNICAL SPECIFICATION, [Online] Mai 2004 (2004-05), Seiten 1-24, XP002308825 Gefunden im Internet: URL:www.3gpp.org> [gefunden am 2004-12-02]
- OMA BROADCAST BOF: "White Paper from the Broadcast Services BOF" OPEN MOBILE ALLIANCE SPECIFICATION, [Online] 30. April 2004 (2004-04-30), Seiten 1-27, XP002308826 Gefunden im Internet: URL:www.openmobilealliance.org> [gefunden am 2004-12-02]
- WAP PUSH WG: "WAP Push Architectural Overview" WAP FORUM STANDARD, [Online] 3. Juli 2001 (2001-07-03), Seiten 1-24, XP002308827 Gefunden im Internet: URL:www.openmobilealliance.org> [gefunden am 2004-12-03]
- P. RIIKONEN: "draft-riikonen-silc-spec-07.txt: Secure Internet Live Conferencing (SILC), Protocol Specification" INTERNET-DRAFT NETWORK WORKING GROUP, 29. Juli 2003 (2003-07-29), Seiten 1-51, XP015005041

## Beschreibung

Die vorliegende Erfindung betrifft die Verbreitung einer Nachricht über wenigstens ein Broadcast-Netz, bei dem ein Sender die Nachricht als mindestens ein Datenpaket aussendet und wenigstens ein Empfänger das Datenpaket empfängt.

Es sind unterschiedliche Systeme zur Übermittlung von Nachrichten und Mehrwert-Informationen bekannt. Besonders Funkrufdienste wie Radio Data System (RDS), Eurosignal oder Cityruf werden vor allem für die Aussendung von kundenspezifischen Nachrichten genutzt. Jedem Empfänger ist dabei ein eigener Adresscode zugeordnet, der als RIC (Radio Identification Code) bezeichnet wird. Unter dieser Adresse kann der Kunde direkt angerufen werden. Diese recht einfachen Systeme sind jedoch für den Empfang von allgemein alphanumerischen Mehrwert-Informationen im Broadcast-Betrieb nur sehr bedingt geeignet.

In der DE 196 10 493 C2 wird ein Verfahren zur Verbreitung von Mehrwert-Informationen vorgeschlagen, das bei Einhaltung der Kompatibilität zu den bisherigen Funkruf-Formaten eine erweiterte Möglichkeit zur Übertragung von Mehrwert-Informationen bereitstellt. Dazu wird neben dem ersten Adresscode ein weiterer Adresscode zur Kennzeichnung mehrerer Empfänger eines Funkrufdienstes vorgesehen. Damit können Mehrwert-Informationen generell auch an mehrere Empfänger versendet werden.

Die DE 196 10 506 C2 schlägt ein weiteres Verfahren zur Verbreitung von Mehrwert-Informationen auf Basis von Funkrufdiensten mit standardisierter Codeform vor, bei dem mittels eines Adresscodes dem Empfänger Nachrichten über bestimmte Frequenzen übermittelt werden können. Jedem Thema von Mehrwert-Informationen ist jeweils eine weitere Adressierung zugeordnet, so dass anhand der Adressierung von mehreren Empfängern ein bestimmtes Thema ausgewählt und empfangen werden kann. Durch Zuordnung eines Aktivierungsdatums zu den einzelnen Themen kann eine Nutzungsdauer der einzelnen Informationen bestimmt werden. Dabei ist es möglich, das Aktivierungsdatum für einzelne Empfänger oder Gruppen von Empfängern festzulegen und nach Ablauf des Datums die entsprechenden Informationen im Endgerät automatisch zu löschen. Die Freigabe von Kanälen, auf denen bestimmte Themen von Mehrwert-Informationen übertragen werden, wird durch Eingabe eines Programmierbefehls im Empfänger realisiert. Nachteilig an diesem Verfahren ist, dass es sich nicht zur Übertragung komplexer Nachrichteninhalte eignet, da die Mehrwert-Information innerhalb einer einzigen Meldung übertragen werden muss und somit auf eine maximale Länge von in der Regel 80 Zeichen beschränkt ist. Dies ist jedoch für anspruchsvolle Anwendungen und detaillierte Informationen zu wenig.

Den bekannten Verfahren und Systemen ist gemein, dass lediglich bestimmte Inhalte übertragen werden können, so z. B. nur Textnachrichten oder nur Börsenkurse. Zur Übertragung unterschiedlicher flexibler Codes sind die vorbekannten Verfahren nicht geeignet. Ferner ist es mit keinem der vorbekannten Verfahren möglich, die Daten und übertragenen Informationen durch ein standardisiertes Verfahren vor Missbrauch und Zugriff Dritter zu schützen. Weiterhin nachteilig an den bekannten Verfahren im Stand der Technik ist, dass sie auf die Nutzung von Standard-Funkrufempfängern optimiert sind. Damit können nach diesen Verfahren übertragene Informationen von anderen Endgeräten nur unter Inkaufnahme von erheblichen Nachteilen verwendet werden. Da die vorbekannten Verfahren auf Funkrufnetze beschränkt sind, eignen sie sich nicht zur Benutzung in anderen, allgemeineren Broadcast-Netzen.

Es ergibt sich somit die Aufgabe, ein Sendeverfahren, ein Empfangsverfahren sowie ein System zur Verbreitung von Nachrichten über ein Broadcast-Netz zu schaffen, das eine standardisierte und geschützte Übertragung von Nachrichten und Informationen ermöglicht, wobei die übertragenen Informationen beliebige, auch komplexe Inhalte haben können und die Benutzung von bestimmten Endgeräten nicht unbedingt notwendig ist.

Gelöst wird die Aufgabe durch ein Verfahren mit den Merkmalen des Anspruchs 1 zur Verbreitung einer Nachricht über wenigstens ein Broadcast-Netz, bei dem ein Sender die Nachricht als mindestens ein Datenpaket aussendet und bei dem wenigstens ein Empfänger das Datenpaket empfängt. Die Aufgabe wird ebenfalls gelöst durch ein Verfahren für einen Empfänger zum Empfang von Nachrichten über wenigstens ein Broadcast-Netz mit den Merkmalen des Anspruchs 3. Ein Sender mit den Merkmalen des Anspruchs 4 zum Verschlüsseln und Versenden mindestens einer Nachricht als wenigstens ein Datenpaket in mindestens einem Broadcast-Netz mit wenigstens einem Empfänger löst gleichfalls die oben gestellte Aufgabe. Die Aufgabe wird auch von einem Empfänger mit den Merkmalen des Anspruchs 5 zum Empfang wenigstens einer Nachricht mindestens eines Broadcast-Netzes in Form von wenigstens einem Datenpaket gelöst.

Vorteilhafte Weiterbildungen der Erfindung finden sich in den Unteransprüchen.

Besonders vorteilhaft erweist sich nach der Erfindung das Erzeugen von Datenpaketen bestehend aus einem öffentlichen Teil und einem geheimen Teil und dem Einfügen einer Information zur Verschlüsselung in den öffentlichen Teil des Datenpakets, anhand derer ein Empfänger auswählen kann, ob die Datenpakete von ihm weiterverarbeitet oder verworfen werden. Das wenigstens eine Datenpaket mit einem öffentlichen Teil und einem geheimen Teil wird von einer Paketeinheit erzeugt, wobei der öffentliche Teil eine Information zur Verschlüsselung enthält. Der öffentliche Teil des Datenpakets ist unverschlüsselt, so dass jeder Empfänger darauf zugreifen kann. Die Information zur Verschlüsselung des geheimen Teils ist somit für jeden Empfänger eines Datenpakets frei zugänglich. Es kann also auf einfache Weise vom Empfänger entschieden werden, ob das Datenpaket weiterverarbeitet werden soll, ohne dass ein Verschlüsselungsverfahren oder ein Codier- bzw. Decodierverfahren auf den geheimen Teil der Nachricht angewendet werden muss. Dies ist vorteilhaft, da Codierverfahren in der Regel eine höhere Rechenkapazität erfordern. Durch einen einfachen Abgleich der übertragenen Information zur Verschlüsselung mit einer im Empfänger hinterlegten Information kann die Auswahl getroffen werden, ob die empfangene Nachricht weiterverarbeitet werden kann.

In einer besonderen Weiterbildung der Erfindung ist jedem Empfänger ein öffentlicher Schlüssel und ein geheimer Schlüssel zugeordnet. Dieses Schlüsselpaar, bestehend aus öffentlichem und zugehörigem geheimen Schlüssel, ist einmalig. Jeder Empfänger verfügt damit über ein eigenes Schlüsselpaar. In einer Empfängerdatenbank des Senders ist dem Empfänger ein öffentlicher Schlüssel und ein geheimer Schlüssel zugeordnet. Somit steht dem Sender für jeden Empfänger das zugehörige Schlüsselpaar zur Verfügung. Damit ist es möglich, die Schlüssel zur Verschlüsselung von Nachrichten, die nur für einen ganz bestimmten Empfängerbestimmt sind, zu benutzen und so eine sichere und geheime Übertragung von Nachrichten zu realisieren.

Besonders bevorzugt ist es nach der Erfindung, die Nachrichten im geheimen Teil des Datenpakets mit dem geheimen Schlüssel eines bestimmten Empfängers zu verschlüsseln, wenn die Nachricht ein Steuerbefehl ist. Dazu wird eine Verschlüsselungseinheit im Sender verwendet. Ein an einen bestimmten Empfänger zu übertragender Steuerbefehl ist also mit dem geheimen Schlüssel des betreffenden Empfängers verschlüsselt, so dass der Steuerbefehl ausschließlich von dem Empfänger entschlüsselt werden kann, dessen geheimer Schlüssel zur Verschlüsselung verwendet wurde. Die Verschlüsselung von Steuerbefehlen wird somit mit der höchsten Verschlüsselungsstufe durchgeführt. Andere Empfänger können den für einen bestimmten Empfänger vorgesehenen Steuerbefehl nicht entschlüsseln, da ihnen der entsprechende geheime Schlüssel fehlt.

Besonders bevorzugt wird ein Verfahren, bei dem eine Paketeinheit ein Datenpaket mit einem öffentlichen Teil und einem geheimen Teil erzeugt, wobei dem öffentlichen Teil des Datenpakets eine Steuerinformation und der öffentliche Schlüssel eines bestimmten Empfängers eingefügt wird und wobei dem geheimen Teil eine Zeit, ebenfalls der öffentliche Schlüssel und ein Steuerbefehl eingefügt werden. Die Verschlüsselungseinheit verschlüsselt den geheimen Teil des Datenpakets mit dem zum öffentlichen Schlüssel des wenigstens einem bestimmten Empfängers gehörenden geheimen Schlüssels. Das übertragene Datenpaket umfasst nun in seinem öffentlichen Teil neben der Steuerinformation den öffentlichen Schlüssel des Empfängers, für den die übertragene Nachricht bestimmt ist. Durch eine einfache Auswertung des übertragenen öffentlichen Schlüssels kann ein Empfänger feststellen, ob er den geheimen Teil entschlüsseln kann. Im geheimen Teil selbst ist der öffentliche Schlüssel des Empfängers noch einmal enthalten. Damit wird sichergestellt, dass der im öffentlichen Teil des Datenpakets übertragene öffentliche Schlüssel nicht während der Übertragung von unberechtigten Dritten verändert oder ausgetauscht wurde. Der im geheimen Teil des Datenpakets vorhandene öffentliche Schlüssel muss nämlich schon vor Verschlüsselung mit dem geheimen Schlüssel dem Sender bekannt sein. Damit wird gewährleistet, dass der Sender, der das Datenpaket verschlüsselt, sowohl den öffentlichen Schlüssel als auch den dazu gehörenden geheimen Schlüssel besitzt. Somit wird die Echtheit der verschlüsselten Nachricht nachgewiesen. Ein Missbrauch durch Dritte, die das Datenpaket während der Übertragung abgefangen und eventuell den öffentlichen Teil verändert haben könnten, ist sicher ausgeschlossen. Auf diese Weise lassen sich auch sehr sensible Daten, Nachrichten oder Steuerbefehle, die zur Steuerung eines Empfängers geeignet sind, sicher übertragen.

Besonders vorteilhaft ist nach der Erfindung ferner ein Verfahren, bei dem die Nachricht eine Dienste-Information ist, eine Dienste-Nummer, eine Dienste-Schlüsselnummer, eine Verfallszeit und eine Steuerinformation in den öffentlichen Teil des Datenpakets eingefügt werden und die verschlüsselte Dienste-Information selbst, die mit dem zur übertragenen Dienste-Schlüsselnummer gehörenden Dienste-Schlüssel verschlüsselt ist, in den geheimen Teil des Datenpakets eingefügt wird. Als Dienste-Information ist jede allgemeine Nachricht oder Mehrwert-Information zu verstehen, die zu einem Empfänger übertragen wird und die nicht direkt der Steuerung des Empfängers dient. Dies können allgemeine Texte sein, aber auch z.B. Börsenergebnisse, aktuelle Nachrichten, Sport- oder Wetternachrichten, Verkehrsfunknachrichten oder ähnliche wertige Dienste, die nur einem bestimmten Empfänger oder einer Gruppe von ausgewählten Empfängern zur Verfügung gestellt werden sollen. Der geheime Teil des Datenpakets enthält dann die verschlüsselte Dienste-Information, die mit einem Dienste-Schlüssel verschlüsselt ist. Im öffentlichen Teil des Datenpakets ist eine Dienste-Nummer enthalten, die die Art des verschlüsselten Dienstes beschreibt. Anhand der Dienste-Nummer kann also erkannt werden, ob die im geheimen Teil des Datenpakets verschlüsselte Dienste-Information beispielsweise eine Börsennachricht oder eine Verkehrsfunknachricht oder ein bestimmtes Sportergebnis ist. Damit wird die Art des übertragenen Dienstes beschrieben, so dass ein Empfänger anhand der Dienste-Nummer entscheiden kann, ob er einen bestimmten Dienst abonniert hat und diesen Dienst zwischenspeichern oder weiterverarbeiten möchte oder ob die übertragene Dienste-Information nicht für ihn bestimmt ist und er das Datenpaket sofort verwerfen kann.

Die Dienste-Schlüsselnummer gibt an, mit welchem Dienste-Schlüssel die im geheimen Teil übertragene Dienste-Information verschlüsselt wurde. Damit lässt sich entscheiden, ob die verschlüsselte Dienste-Information überhaupt entschlüsselt werden kann, ohne jedoch den zur Verschlüsselung verwendeten Schlüssel anwenden zu müssen. Mit der übertragenen Verfallszeit kann die Aktualität der Dienste-Nummer gekennzeichnet werden, so dass veraltete Daten nach einer vorgegebenen Zeit automatisch aus dem Speicher gelöscht werden. Anhand der Verfallzeit könnte aber auch verhindert werden, dass alte überholte Dienste empfangen, weiterverarbeitet oder gespeichert werden. Dies ist beispielsweise dann sinnvoll, wenn lediglich aktuelle Verkehrsmeldungen übertragen werden sollen. In der Steuerinformation im öffentlichen Teil kann beispielsweise eine Information übertragen werden, ob das Datenpaket die gesamte Dienste-Information oder lediglich einen Teil davon enthält, wenn die Nachricht aufgrund ihrer Länge auf mehrere Datenpakete aufgeteilt ist. Auch sind Informationen möglich, die den Anfang bzw. das Ende oder eine bestimmte Information einer Gruppe von Dienste-Informationen bzw. Gruppe von Datenpaketen kennzeichnen.

In einer besonders bevorzugten Ausführungsform hat der Sender eine Dienste-Datenbank mit Dienste-Nummern und den zugehörigen Dienste-Informationen sowie mit Dienste-Schlüsselnummern und den zugehörigen Dienste-Schlüsseln zur Verschlüsselung der Dienste-Information. Die Paketeinheit des Empfängers erzeugt wenigstens ein Datenpaket mit einem öffentlichen Teil, umfassend die Dienste-Nummer, die Dienste-Schlüsselnummer, eine Verfallszeit und eine Steuerinformation, und einen geheimen Teil, umfassend die mit dem zur Dienste-Nummer gehörenden Dienste-Schlüssel verschlüsselten Dienste-Information.

In einer besonderen Weiterbildung der Erfindung hat der Sender eine Zuordnungseinheit zur Zuordnung eines bestimmten Empfängers zu wenigstens einer Dienste-Nummer oder einer Dienste-Information und eine Teilnehmerverwaltung zur Abspeicherung der Zuordnung von Empfänger zu Dienste-Nummer bzw. Dienste-Information. Den einzelnen Empfängern werden Dienste-Nummern bzw. Dienste-Informationen zugeordnet. Das sind genau die Dienste-Informationen, die der Empfänger abonniert hat, zu deren Empfang er also berechtigt ist. Diese Zuordnung der Empfänger zu bestimmten Diensten wird in der Teilnehmerverwaltung des Senders abgespeichert. Damit kann jederzeit festgestellt werden, welche Dienste von welchen Empfängern empfangen werden sollen.

Bevorzugt gemäß der Erfindung weist der Empfänger mit einer Empfangseinheit zum Empfangen des wenigstens einen Datenpakets einen Analysator auf, wobei der Analysator erkennt, ob die verschlüsselte Nachricht im geheimen Teil des Datenpakets entschlüsselt werden kann. Der Empfänger umfasst weiterhin eine Prozessoreinheit zur Weiterverarbeitung der entschlüsselbaren Nachrichten. Die Datenpakete werden nur dann weiterverarbeitet, wenn die darin enthaltenen Nachrichten auch entschlüsselt werden können. Wird vom Analysator erkannt, dass die Nachrichten nicht entschlüsselt werden können, wird der Empfang der Nachricht abgebrochen. Auf diese Art und Weise werden nur für den jeweiligen Empfänger bestimmte Nachrichten empfangen. Alle anderen Nachrichten werden verworfen. Durch das Verwerfen der Nachrichten wird Rechenzeit im Empfänger gewonnen und somit Energie eingespart. Dies führt zu längeren Batteriestandzeiten bei mobilen Geräten.

In einer vorteilhaften Weiterbildung des Verfahrens nach der Erfindung werden folgende Schritte durchgeführt: Überprüfen, ob die übertragene Nachricht ein Steuerbefehl ist. Sodann Vergleichen eines in einem öffentlichen Teil des Datenpakets übertragenen öffentlichen Schlüssels mit einem bestimmten öffentlichen Schlüssel, wobei der bestimmte öffentliche Schlüssel in einem bestimmten Empfänger hinterlegt ist. Anschließend Entschlüsseln des geheimen Teils des Datenpakets, wenn die öffentlichen Schlüssel identisch sind. Wenn die übertragene Nachricht ein Steuerbefehl ist, enthält das Datenpaket im öffentlichen Teil einen öffentlichen Schlüssel. Ist dieser öffentliche Schlüssel im Empfänger hinterlegt, dann ist das Datenpaket für diesen Empfänger bestimmt. Der Empfänger ist in der Lage, den geheimen Teil des Datenpakets zu entschlüsseln. Damit wird auf einfache Weise und mit einem einfachen Vergleich des im öffentlichen Teil übertragenen öffentlichen Schlüssels mit dem im Empfänger hinterlegten öffentlichen Schlüssel erkannt, ob der geheime Teil des Datenpakets entschlüsselt werden kann. Anderenfalls kann das Datenpaket sofort verworfen werden, muss also nicht weiterverarbeitet werden. Da das Erkennen durch einen simplen Vergleich stattfindet, ist dieses Verfahren sehr schnell, verlangt wenig Rechenkapazität und kommt auch mit kleinen Arbeitsspeichern des das Verfahren durchführenden Gerätes aus, und ist zudem geräteunabhängig.

In einer besonderen Weiterbildung des Verfahrens wird der folgende weitere Schritt durchgeführt: Entschlüsseln des geheimen Teils des Datenpakets mit einem zu dem im öffentlichen Teil des Datenpakets übertragenen öffentlichen Schlüssels korrespondierenden geheimen Schlüssel. Da ein geheimer und ein öffentlicher Schlüssel ein Schlüsselpaar bilden, kann die Nachricht nur mit dem zu dem öffentlichen Schlüssel gehörenden geheimen Schlüssel entschlüsselt werden, da sie mit genau diesem Schlüssel verschlüsselt wurde. Damit ist unzweifelhaft festgelegt, mit welchem geheimen Schlüssel die Nachricht entschlüsselt werden muss. Andere geheime Schlüssel eignen sich nicht zum Entschlüsseln der Nachricht. Auf diese Weise wird eine hohe Sicherheit der übertragenen Daten erreicht.

Besonders vorteilhaft ist ein Empfänger nach der Erfindung, der einen Schlüsselspeicher aufweist, in dem ein Schlüsselpaar, bestehend aus einem geheimen Schlüssel und einem öffentlichen Schlüssel, hinterlegt ist, und der einen Vergleicher aufweist zum Vergleichen des übertragenen öffentlichen Schlüssels im öffentlichen Teil des Datenpakets mit dem öffentlichen Schlüssel im Schlüsselspeicher. Der Empfänger umfasst eine Entschlüsselungseinheit zum Entschlüsseln der verschlüsselten Nachricht im geheimen Teil des Schlüsselpakets mit dem geheimen Schlüssel des Empfängers bei Identität des öffentlichen Schlüssels aus dem Schlüsselspeicher mit dem übertragenen öffentlichen Schlüssel. Im Schlüsselspeicher des Empfängers ist das zu dem Empfänger gehörende Schlüsselpaar hinterlegt. Bei Identität der beiden öffentlichen Schlüssel wird die Nachricht von der Verschlüsselungseinheit mit Hilfe des geheimen Schlüssels aus dem Schlüsselspeicher entschlüsselt. Der Zugriff auf die verschlüsselte Nachricht im geheimen Teil des Datenpakets ist auf den bestimmten Empfänger beschränkt.

Bevorzugt umfasst das Verfahren die Schritte: Vergleichen des im geheimen Teil des Datenpakets vorhandenen öffentlichen Schlüssels mit dem bestimmten öffentlichen Schlüssel. Danach Vergleichen einer im geheimen Teil des Datenpakets übertragenen Uhrzeit mit einer internen Uhrzeit und, bei Identität der öffentlichen Schlüssel und bei Aktualität der übertragenen Uhrzeit, Speichern und Weiterverarbeiten der entschlüsselten Nachricht. Durch den Vergleich des im geheimen Teil des Datenpakets übertragenen öffentlichen Schlüssels mit dem bestimmten öffentlichen Schlüssel des Empfängers wird die Echtheit des geheimen Teils des Datenpakets und der darin enthaltenen Informationen überprüft und sichergestellt. Nur wenn die beiden öffentlichen Schlüssel übereinstimmen, ist die übertragene Information echt und wurde nicht von Dritten verändert, da der öffentliche Schlüssel dem Absender schon vor Verschlüsselung der Nachricht bekannt sein musste. Durch den Vergleich der übertragenen Uhrzeit mit der internen Uhrzeit kann die Aktualität der übertragenen Nachricht festgestellt werden. Damit wird verhindert, dass Informationen weiterverarbeitet werden, die veraltet sind oder deren Gültigkeit bereits abgelaufen ist. Auch lässt sich bei der Übertragung von mehreren gleichen Steuerbefehlen feststellen, welcher der Befehle aktuell ist und weiterverarbeitet werden soll. Darüber hinaus gewährleistet die mitgesandte Uhrzeit, dass Nachrichten, die von Dritten abgefangen und manipuliert werden und dann zu einem späteren Zeitpunkt zugestellt werden, sicher erkannt und ausgesondert werden können. Die Übertragungssicherheit wird somit erhöht.

Nach der Erfindung weist der Empfänger eine Uhr zur Feststellung der Aktualität der übertragenen Nachricht anhand der Uhrzeit im geheimen Teil des Datenpakets auf, sowie einen ersten Speicher zur Speicherung der entschlüsselten Nachricht bei Aktualität der übertragenen Uhrzeit. Die entschlüsselte Nachricht wird, sofern sie aktuell ist und ihre Echtheit bestätigt wurde, in einem ersten Speicher des Empfängers abgespeichert. Somit kann auch zu einem späteren Zeitpunkt auf die Nachricht noch zurückgegriffen werden.

Bevorzugt umfasst das erfindungsgemäße Verfahren folgende Schritte: Auslesen und Auswerten der im öffentlichen Teil des Datenpakets übertragenen Steuerinformation und anschließendes Erkennen anhand der Steuerinformation, ob der geheime Teil des Datenpakets einen Steuerbefehl als Nachricht enthält.

Nach der Erfindung hat der Empfänger eine Auswerteeinheit zur Auswertung einer übertragenen Steuerinformation im öffentlichen Teil des Datenpakets und zum Erkennen eines Steuerbefehls im geheimen Teil des Datenpakets. Anhand der Steuerinformation im öffentlichen Teil des Datenpakets kann auf einfache Weise erkannt werden, ob im geheimen Teil ein Steuerbefehl enthalten ist. Mit einem solchen Steuerbefehl kann auf den Empfänger Einfluss genommen werden. Beispielsweise können als Steuerbefehl Dienste-Schlüssel und zugehörige Dienste-Schlüsselnummern übertragen werden. Auch ist das Abonnieren von bestimmten Diensten bzw. Mehrwert-Informationen und die Genehmigung auf den Zugriff solcher Informationen über einen Steuerbefehl möglich. Der Steuerbefehl kann jede beliebige Form annehmen. Das Verfahren ist deshalb auch nicht an einen bestimmten Gerätetyp gebunden sondern kann generell von den unterschiedlichsten Geräten angewendet werden.

Gemäß der Erfindung wird überprüft, ob die übertragene Nachricht eine Dienste-Information ist. Dies wird durch den Analysator des Empfängers erkannt. Anschließend wird mit einer Auswerteeinheit der öffentliche Teil des Datenpakets ausgewertet und eine Dienste-Nummer, eine Dienste-Schlüsselnummer, eine Verfallszeit und eine Steuerinformation im öffentlichen Teil erkannt. Die im öffentlichen Teil des Datenpakets übertragene Dienste-Nummer wird mit einer bestimmten Dienste-Nummer, die in einem bestimmten Empfänger einer ersten Datenbank hinterlegt ist, verglichen, und die Dienste-Informationen wird nur weiterverarbeitet, wenn die übertragene Dienste-Nummer mit der bestimmten abgespeicherten Dienste-Nummer identisch ist. Dieser Vergleich wird von einem Vergleicher im Empfänger durchgeführt. Nur wenn die übertragene Dienste-Nummer des Datenpakets im Empfänger hinterlegt ist, er also berechtigt ist, diesen Dienst zu empfangen, wird das Datenpaket weiterverarbeitet. Wurde das Datenpaket noch nicht vollständig empfangen, wird der weitere Empfang fortgesetzt. Anderenfalls wird das Datenpaket sofort verworfen bzw. der Empfang abgebrochen. Auf diese Art und Weise werden Verarbeitungsressourcen und Speicherkapazitäten des Empfängers geschont und Energie gespart, so dass die Batteriestandzeit verlängert wird.

In einer vorteilhaften Ausgestaltung des Verfahrens werden folgende Schritte durchgeführt: Auslesen der übertragenen Dienste-Schlüsselnummer aus dem öffentlichen Teil des Datenpakets. Anschließend Überprüfen, ob in dem Empfänger ein zu der übertragenden Dienste-Schlüsselnummer gehörender Dienste-Schlüssel vorhanden ist. Sodann Entschlüsseln der gespeicherten Dienste-Information mit dem zu übertragenden Dienste-Schlüsselnummer gehörenden Dienste-Schlüssel. Schließlich Weiterverarbeiten oder Abspeichern der entschlüsselten Dienste-Information. Die übertragene Dienste-Schlüsselnummer gibt Auskunft darüber, mit welchem Dienste-Schlüssel der geheime Teil des Datenpakets verschlüsselt wurde. Nur wenn die Dienste-Schlüsselnummer und der dazu gehörende Dienste-Schlüssel in dem Empfänger vorhanden sind, kann die Dienste-Information entschlüsselt werden. Eine Entschlüsselung ist also nur möglich, wenn eine Berechtigung besteht, d. h. der Dienste-Schlüssel vorhanden ist. Der Empfänger muss also den entsprechenden Dienst bzw. die Dienste-Information abonniert haben. Nur dann befindet sich in einer zweiten Datenbank der entsprechende Dienste-Schlüssel, der zu der Dienste-Schlüsselnummer passt. Liegt diese Berechtigung nicht vor, kann die Entschlüsselungseinheit im Empfänger die verschlüsselte Dienste-Information nicht entschlüsseln. Die Dienste-Information wird erst dann in einem zweiten Speicher des Empfängers abgespeichert, wenn sie entschlüsselt wurde. Anderenfalls wird das Datenpaket sofort verworfen und die empfangene Dienste-Information erst gar nicht abgespeichert.

Die Dienste-Schlüsselnummern und die zugehörigen Dienste-Schlüssel können dem Empfänger in verschlüsselter Form als Steuerbefehl übermittelt werden. Auch können diese Dienste-Schlüssel und Dienste-Schlüsselnummern aus der zweiten Datenbank des Empfängers wieder gelöscht werden. Dies wird dann durchgeführt, wenn das Abonnement einer bestimmten Dienste-Information gekündigt oder abgelaufen ist. Die Dienste-Schlüssel und Dienste-Schlüsselnummern können gleichzeitig in mehreren verschiedenen Empfängern gespeichert sein. Damit ist es möglich, einer Gruppe von Empfängern Zugriff auf bestimmte Dienste zu ermöglichen. Andere Empfänger, die keine Berechtigung zum Empfang bzw. zur Entschlüsselung der Dienste-Information besitzen, können dadurch ausgeschlossen werden, dass ihnen der Dienste-Schlüssel nicht übertragen wird.

Eine besondere Ausführungsform wird anhand der nachstehenden Abbildungen erläutert. Es zeigen:
- Figur 1: ein Broadcast-Netz mit einem Sender und Empfängern;
- Figur 2: die Struktur eines übertragenen Datenpakets, das einen Steuer- befehl umfasst;
- Figur 3: die Struktur eines Datenpakets, das eine Dienste-Information enthält;
- Figur 4: den Sender des Broadcast-Netzes von Figur 1; und
- Figur 5: den Empfänger des Broadcast-Netzes von Figur 1.

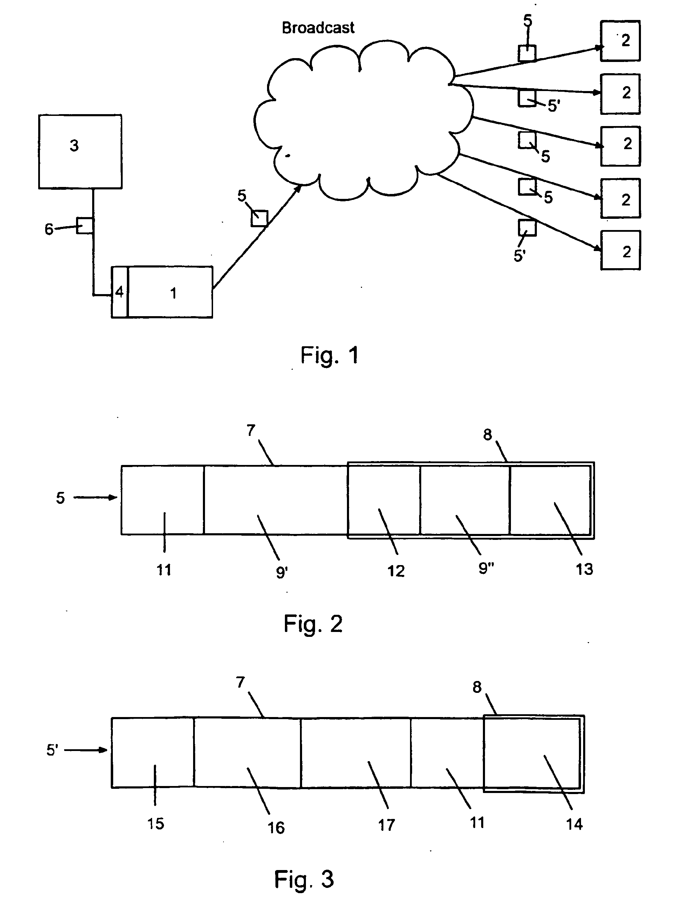

Das Broadcast-Netz nach Fig. 1 umfasst einen Sender 1 und fünf Empfänger 2. Der Sender 1 sendet Nachrichten in Form von digitalen Datenpaketen aus. Diese Pakete können von allen Empfängern 2 empfangen werden. Ein externer Dienste-Anbieter 3, ein sogenannter Content Provider, kann bestimmte Dienste, Mehrwert-Informationen 6 oder Nachrichten zur Verfügung stellen. Die Dienste oder Inhalte werden über eine Schnittstellen, dem sogenannten Content-Gateway 4, dem Sender 1 zugeleitet und von dem Sender 1 in das Netz eingespeist, so dass die Inhalte von den Empfängern 2 empfangen werden können.

Die Informationen oder Nachrichten werden innerhalb des Broadcast-Netzes in Form von Datenpaketen 5 übermittelt. Die Datenpakete 5 enthalten entweder Dienste bzw. Mehrwertinformationen, die von dem Dienste-Anbieter 3 zur Verfügung gestellt werden oder Befehle zur Steuerung der Empfänger 2. Die Datenpakete 5, die einen Steuerbefehl enthalten, weisen die Struktur nach Fig. 2 auf.

Die Datenpakete 5 bestehen aus einem öffentlichen Teil 7 und einem geheimen Teil 8. Der geheime Teil 8 ist verschlüsselt, wobei die Verschlüsselung und Entschlüsselung auf dem Prinzip der Verschlüsselung mit einem bekannten öffentlichen Schlüssel 9 und einem dazugehörigen geheimen Schlüssel 10 basieren. Der öffentliche Teil 7 des Datenpakets 5 ist unverschlüsselt. Der öffentliche Teil 7 umfasst Steuerinformationen 11 und den öffentlichen Schlüssel 9. Die Steuerinformation 11 umfasst mehrere Bits, in denen beispielsweise ein Funktionscode integriert ist, der festlegt, ob das Datenpaket an einen einzelnen oder an eine Gruppe von Empfängern 2 gerichtet ist. Anhand des öffentlichen Schlüssels 9 wählt ein Empfänger 2 aus, ob die Nachricht bzw. das Datenpaket 5 für ihn bestimmt ist.

Der geheime Teil 8 des Datenpakets 5 enthält eine Zeit 12, den öffentlichen Schlüssel 9 des Empfängers 2, für den die Nachricht bestimmt ist, und einen Steuerbefehl 13. Die Zeit 12 dient zur Feststellung der Aktualität der übermittelten Nachricht bzw. des übermittelten Steuerbefehls 13. Es werden von einem Empfänger 2 nur solche Nachrichten akzeptiert, die nicht älter als 20 Minuten sind. Damit wird die Aktualität der Nachricht sichergestellt. Der öffentliche Schlüssel 9 im geheimen Teil 8 des Datenpakets 5 dient zur Verifikation der Echtheit der übertragenen Nachricht. Dem Sender 1 muss schon bei der Verschlüsselung der Nachricht der öffentliche Schlüssel 9 sowie der zugehörige geheime Schlüssel 10 bekannt sein. Wird eine Nachricht auf dem Übertragungswege etwa von einem Dritten abgefangen und der im öffentlichen Teil 7 des Datenpakets 5 befindliche öffentliche Schlüssel 9 verändert, so wird diese Manipulation dadurch erkannt, dass der öffentliche Schlüssel 9 im öffentlichen Teil des Datenpakets 5 nicht mit dem öffentlichen Schlüssel 9 im geheimen Teil 8 des Datenpakets 5 übereinstimmt. Damit wird eine hohe Zuverlässigkeit bzw. große Sicherheit bei der Übertragung der verschlüsselten Nachrichten gewährleistet.

Der Steuerbefehl 13 umfasst mehrere Bits. Die ersten acht Bit sind einem sogenannten "Over The Air (OTA)-Command Type" reserviert. Die darauffolgenden Bits sind in Abhängigkeit des OTA gestaltet. Der OTA-Command-Type charakterisiert die Art des Steuerbefehls 13. Beispielsweise können mit dem Steuerbefehl 13 bestimmte Kanäle oder Broadcastdienste freigeschaltet werden oder ein neuer Schlüssel zur Entschlüsselung von Mehrwertinformationen übertragen werden. Steuerbefehle dienen auch zur Freischaltung bzw. zum Sperren von Mehrwertinformationen bzw. zur Regelung eines Abonnements von Mehrwertinformationen. Auch spezifische Informationen wie zum Beispiel Alarmfunktionen, Alarmtöne, besondere Nachrichten oder besonders zu sichernde Texte können als Steuerbefehl 13 übertragen werden. Die Struktur des Steuerbefehls 13 besteht aus mehreren Parameterfeldern, wobei regelmäßig zwei Felder zueinander gehören. Das erste Feld hat die Größe von 8 Bit und kennzeichnet die Nummer des Parameterfelds. Das Parameterfeld selbst ist deutlich länger. Seine Größe ist ein Vielfaches von 8 Bit.

Werden in einem Datenpaket 5 keine Steuerbefehle 13 übermittelt, sondern statt dessen Dienste-Informationen 14, so weist es die Struktur nach Fig. 3 auf. Das Datenpaket 5' besteht wieder aus einem öffentlichen Teil 7 und einem geheimen Teil 8. Der öffentliche Teil 7 umfasst nun eine Dienste-Nummer 15, die die Art der übertragenen Dienste-Information 14 charakterisiert. Je nachdem, ob die Dienste-Information 14, die im geheimen Teil 8 des Datenpakets 5' übertragen wird, zum Beispiel eine Verkehrsfunkmeldung, ein Wetterbericht, eine Börseninformation, ein Sportergebnis oder eine andere Information ist, wird jeder Kategorie der Dienste-Information 14 eine eigene Dienste-Nummer 15 zugeordnet. Der öffentliche Teil 7 des Datenpakets 5' umfasst weiterhin eine Dienste-Schlüsselnummer 16, eine Verfallszeit 17 und eine Steuerinformation 11. Der geheime Teil 8 des Datenpakets 5 umfasst die Dienste-Information 14 in verschlüsselter Form.

Die Dienste-Schlüsselnummer 16 charakterisiert einen Dienste-Schlüssel 18, mit dem die Dienste-Information 14 verschlüsselt wurde. Der Dienste-Schlüssel 18 umfasst eine Länge von 8 Bit. Damit sind 255 verschiedene Dienste-Schlüssel 18 möglich. Die Verfallszeit 17 ist die Zeit, ab der die Information als veraltet gilt. Die Verfallszeit 17 kann vom Sender 1 festgelegt werden. Mögliche Verfallszeiten beginnen bei 15 Minuten bis hin zu 30 Tagen. Auch ist es möglich, die Verfallszeit 17 auf unendlich zu setzen. In diesem Fall verfällt die übertragene Dienste-Information 14 nie. Nach Ablauf der Verfallszeit 17 wird der Empfang eines Datenpakets 5' vom Empfänger 2 verweigert. Bereits in einem Empfänger 2 abgespeicherte Dienste-Informationen 14, deren Verfallszeit 17 überschritten ist, können von Empfänger 2 selbständig gelöscht werden. Damit wird die Aktualität der Dienste-Informationen 14 gewährleistet.

Die Steuerinformation 11 umfasst mehrere Bits. Das erste Bit signalisiert, ob es sich um eine einzelne Nachricht oder um einen Teil eines mehrteilige Nachricht handelt. Ein weiteres Bit signalisiert bei mehrteiligen Nachrichten, ob das erste Paket oder eines der Folgepakete der mehrteiligen Nachricht übertragen wird. Eine Nachricht, die in mehrteiligen Datenpaketen 5' übertragen wird, kann aus insgesamt 129 Einzelpaketen bestehen.

Die weiteren Bits können je nach Art der Nachricht einen Dringlichkeitshinweis enthalten. Steuerinformation 11 mit einem Dringlichkeitshinweis werden bevorzugt behandelt. Die entschlüsselte Dienste-Information wird entweder sofort einem Display zugeleitet oder ein Warnton wird auf einem Lautsprecher ausgegeben. Bei mehrteiligen Nachrichten dienen die folgenden Bits zur Identifikation des Paketes, zum Verweis auf das erste übertragene Paket und zum Verweis auf die Anzahl der noch folgenden Pakete. Je nach Art der übertragenen Nachricht ist die Steuerinformation 11 unterschiedlich lang. Die Dienste-Information 14 ist mit dem Dienste-Schlüssel 18 verschlüsselt, dessen Dienste-Schlüsselnummer 16 im öffentlichen Teil 7 des Datenpakets 5' übertragen wurde. Die Länge der Dienste-Information 14 ist in der Regel ein Vielfaches von 20 Bit.

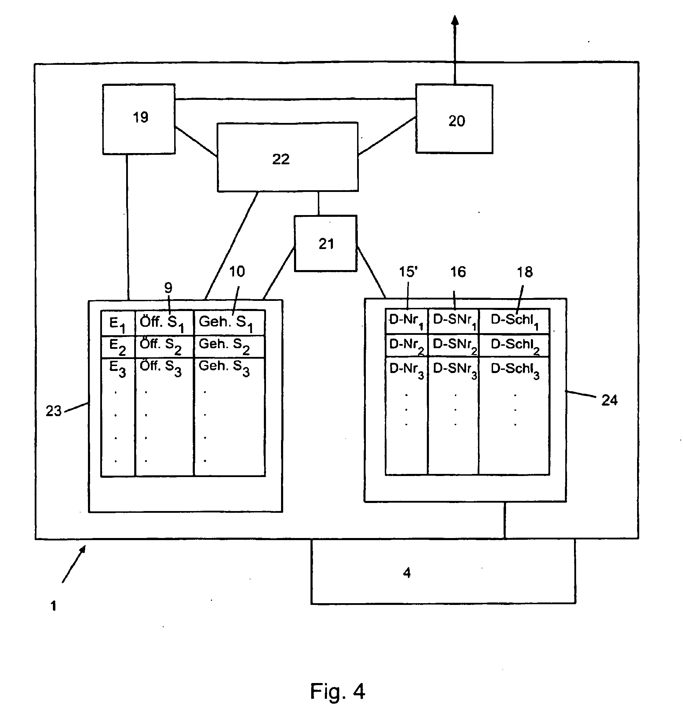

Der Sender 1 des Broadcast-Netzes wird nun anhand von Fig. 4 näher beschrieben. Der Sender 1 umfasst eine Verschlüsselungseinheit 19, eine Paketeinheit 20, eine Zuordnungseinheit 21, eine Teilnehmerverwaltung 22 und eine Empfängerdatenbank 23 sowie eine Dienste-Datenbank 24.

Die Verschlüsselungseinheit 19 verschlüsselt den geheimen Teil 8. Die Dienste-Datenbank 24 umfasst die Dienste-Nummern 15, die Art der Dienste-Information und die Dienste-Information 14 selbst, deren Inhalte von dem Dienste-Anbieter 3 zur Verfügung gestellt werden. Die Dienste-Information 14 erreichen die Dienste-Datenbank 24 des Senders 1 über den Content-Gateway 4. Die Dienste-Datenbank 24 umfasst weiter die Dienste-Schlüsselnummern 16 und die zugehörigen Dienste-Schlüssel 18, mit denen die Dienste-Informationen 14 von der Verschlüsselungseinheit 19 verschlüsselt werden.

In der Empfänger-Datenbank 23 sind die öffentlichen Schlüssel 9 und dazugehörigen geheimen Schlüssel 10 aller Empfänger 2 gespeichert, die dem Broadcast-Netz angehören und die Informationen und Nachrichten vom Sender 1 empfangen sollen. Jedem Empfänger 2 ist dabei ein einzigartiges Schüsselpaar zugeordnet.

Die Zuordnung von bestimmten Empfängern 2 zu einzelnen Dienste-Informationen 14 bzw. Arten von Dienste-Informationen 14 findet mittels der Zuordnungseinheit 21 statt. In der Teilnehmerverwaltung 22 werden die unterschiedlichen Zuordnungen von Empfängern 2 zu Dienste-Informationen 14 bzw. zu Dienste-Nummern 15, die als Variable für die entsprechenden Dienste-Informationen 14 stehen, abgespeichert.

In der Paketeinheit 20 werden die Datenpakete 5 bzw. 5' erzeugt. Die Struktur der Datenpakete hängt davon ab, ob sie einen Steuerbefehl 13 oder eine Dienste-Information 14 beinhaltet. Wenn eine Dienste-Information 14 im Datenpaket 5' übertragen wird, entspricht der in Fig. 3 dargestellten Struktur. Der geheime Teil 8 eines Datenpakets 5 bzw. 5' wird mit der Verschlüsselungseinheit 19 verschlüsselt. Zur Verschlüsselung der Dienste-Information 14 wird der zu der im öffentlichen Teil 7 des Datenpakets 5' übertragenen Dienste-Schlüsselnummer 16 gehörige Dienste-Schlüssel 18 verwendet.

Wird ein Steuerbefehl 13 mit dem Datenpaket 5 übertragen, so baut die Paketeinheit 20 das Datenpaket 5 gemäß der Struktur von Fig. 2 auf. Der öffentliche Schlüssel 9 wird der Empfänger-Datenbank 23 entnommen, wobei der öffentliche Schlüssel 9 dem Empfänger 2 zugeordnet ist, für den das Datenpaket 5 bestimmt ist. Der geheime Teil 8 des Datenpakets 5 umfasst die Zeit 12, den öffentlichen Schlüssel 9 des Empfängers 2, für den das Datenpaket 5 bestimmt ist, sowie den Steuerbefehl 13 selbst. Der geheime Teil 8 des Datenpakets 5 wird von der Verschlüsselungseinheit 19 mit dem geheimen Schlüssel 10 verschlüsselt, wobei der geheime Schlüssel 10 zu dem Empfänger 2 gehört, für den das Datenpaket 5 bestimmt ist. Die Zuordnung zwischen dem geheimen Schlüssel 10, dem öffentlichen Schlüssel 9 und dem Empfänger 2 ist in der Empfänger-Datenbank 23 hinterlegt. Aus der Empfänger-Datenbank 23 entnimmt die Verschlüsselungseinheit 19 die entsprechenden Zuordnungen.

Zur Verschlüsselung stehen unterschiedliche Verschlüsselungsmethoden zur Verfügung. Als Verschlüsselungsmethoden dient beispielsweise die sogenannte "Blow-fish"-Methode basierend auf einer sechzehnfachen Anwendung oder einer vierfachen Anwendung, wobei es sich als sinnvoll erweist, alle sogenannten "Subkeys P" und sogenannte "Sandbox tables S" nur einmal zu ermitteln und sie in einem separaten Speicher abzuspeichern. Weitere Verschlüsselungsmethoden basieren auf einem XOR-Gatter bzw. aus einer Kombination aus XOR-Gatter und einem "Table Mapping". Auch das Table Mapping allein ist eine mögliche Verschlüsselungs- bzw. Entschlüsselungsmethode. Es kann aber auch gar keine Verschlüsselung vorgesehen werden. Dies kann ausnahmsweise der Fall sein zu Testzwecken oder wenn eine unverschlüsselte Information übertragen wird, die allen Empfängern zur Verfügung stehen soll. Dies können insbesondere Warnhinweise oder Berechtigungen für Nachrichten von besonderer Brisanz sein.

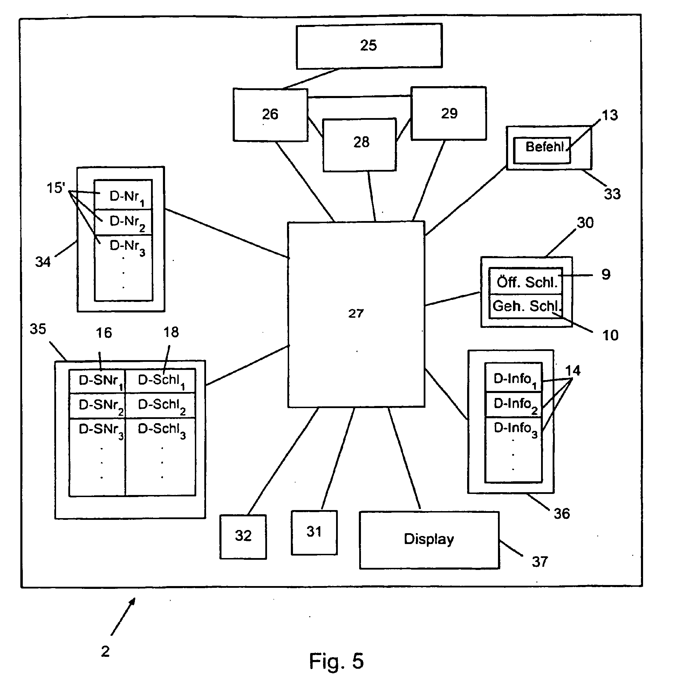

Der Empfänger 2 gemäß Fig. 5 umfasst eine Empfangseinheit 25 zum Empfang der im Broadcast-Netz vom Sender 1 übertragenen Datenpakete 5, 5', einen Analysator 26, der anhand von Informationen zur Verschlüsselung im öffentlichen Teil 7 des Datenpakets 5, 5' erkennt, ob die Daten bzw. Informationen im geheimen Teil 8 des Datenpakets 5, 5' entschlüsselt werden können, und eine Prozessoreinheit 27 zur Weiterverarbeitung der entschlüsselbaren Nachricht. Vor der Weiterverarbeitung durch die Prozessoreinheit 27 wird der geheime Teil 8 eines jeden empfangenen Datenpakets 5, 5' von einer Entschlüsselungseinheit 28 entschlüsselt. Eine Auswerteeinheit 29 erkennt anhand der Struktur des übermittelten Datenpakets 5bzw. 5', ob im geheimen Teil 8 ein Steuerbefehl 13 oder eine Dienste-Information 14 enthalten ist. Die Auswerteeinheit 29 wertet die übertragene Steuerinformation 11 im öffentlichen Teil 7 des Datenpakets 5, 5' aus.

Der Empfänger 2 umfasst weiterhin einen Schlüsselspeicher 30, in dem ein Schlüsselpaar abgespeichert ist, das aus dem geheimen Schlüssel 10 und dem dazugehörigen öffentlichen Schlüssel 9 des Empfängers 2 besteht. Dieses Schlüsselpaar ist die eindeutige Seriennummer des jeweiligen Empfängers 2. Dabei ist nur der eine Teil der Seriennummer beispielsweise dem Nutzer bekannt. Dieser Teil der Seriennummer, der gleichzeitig der öffentliche Schlüssel 9 ist, kann beispielsweise auch auf dem Gehäuse des Empfängers 2 vermerkt sein. Der geheime Teil der Seriennummer ist jedoch nur dem Sender 1 und dem Empfänger 2 bekannt. Im Sender 1 ist der geheime Teil der Seriennummer in der Empfängerdatenbank 23 abgelegt; im Empfänger 2 ist der geheime Schlüssel 10 im Schlüsselspeicher 30 hinterlegt. Ein Vergleicher 31 dient zum Abgleich des übertragenen öffentlichen Schlüssels 9' mit dem im Schlüsselspeicher 30 hinterlegten öffentlichen Schlüssel 9 des Empfängers 2.

Wird ein Datenpaket 5, 5' von der Empfangseinheit 25 empfangen, so stellt der Analysator 26 zunächst fest, ob die Nachricht empfangen werden darf bzw. ob sie entschlüsselt werden kann. Ermittelt anschließend die Auswerteeinheit 29, dass im geheimen Teil 8 ein Steuerbefehl 13 enthalten ist, wird das Datenpaket 5 von der Prozessoreinheit 27 weiter verarbeitet. Die Prozessoreinheit 27 liest den öffentlichen Schlüssel 9 aus dem Schlüsselspeicher 30 aus und führt sie dem Vergleicher 31 zu. Der Vergleicher 31 vergleicht den hinterlegten öffentlichen Schlüssel 9 mit dem öffentlichen Schlüssel 9', der im Datenpaket 5 übertragen wurde. Bei Identität der beiden öffentlichen Schlüssel 9, 9' ist das Datenpaket 5 für den Empfänger 2 bestimmt. Die Entschlüsselungseinheit 28 entschlüsselt nun den geheimen Teil 8 des Datenpakets 5. Dazu wird der geheime Schlüssel 10 des Empfängers 2 benutzt, der ebenfalls im Schlüsselspeicher 30 hinterlegt ist. Nach der Entschlüsselung des geheimen Teils 8 des Datenpakets 5 wird der öffentliche Schlüssel 9" aus dem geheimen Teil 8 des Datenpakets 5 ausgelesen und im Vergleicher 31 mit dem im Schlüsselspeicher 30 hinterlegten öffentlichen Schlüssel 9 des Empfängers 2 verglichen. Bei Identität der öffentlichen Schlüssel 9, 9" wird die übertragene Zeit 12 mit der internen Uhrzeit einer Uhr 32 des Empfängers 2 verglichen. Bei Aktualität des empfangenen Datenpakets 5 wird der im geheimen Teil 8 enthaltene Steuerbefehl 13 in einem ersten Speicher 33 abgespeichert. Ein Datenpaket 5 gilt dann als aktuell, wenn das Datenpaket 5 beim Empfang durch den Empfänger 2 nicht älter als 20 Minuten ist. Der entschlüsselte Steuerbefehl 13 wird nun von der Prozessoreinheit 27 weiter verarbeitet. Abhängig von der Art des Steuerbefehls wird der Steuerbefehl 13 analysiert und in seine verschiedenen Komponenten aufgeteilt. Diese Komponenten können dann, beispielsweise wenn es sich um Dienste-Nummern 15 oder Dienste-Schlüsselnummern 16 bzw. um Dienste-Schlüssel 18 handelt, in einer ersten Datenbank 34 oder in einer zweiten Datenbank 35 abgelegt werden. Die erste Datenbank 34 umfasst die Dienste-Nummern 15 für all die Dienste-Informationen 14 bzw. für die all die Arten von Dienste-Informationen, die von dem Empfänger 2 empfangen werden können sollen. Die zweite Datenbank 35 enthält die Dienste-Schlüssel 18 und die zugehörigen Dienste-Schlüsselnummern 16, mit denen die Dienste-Informationen 14 verschlüsselt wurden.

Enthält ein übertragenes Datenpaket 5' im geheimen Teil 8 eine Dienste-Information 14, so erkennt die Auswerteeinheit 29 dies. Die Auswerteeinheit 29 liest die Dienste-Nummer 15 aus dem öffentlichen Teil 7 des Datenpakets 5' aus und führt sie dem Vergleicher 31 zu. Der Vergleicher 31 vergleicht die empfangene Dienste-Nummer 15 mit der im Empfänger 2 hinterlegten Dienste-Nummer 15', die in der ersten Datenbank 34 abgespeichert ist. Ist die übertragene Dienste-Nummer 15 in der ersten Datenbank 34 enthalten, hat der Empfänger 2 die Berechtigung das Datenpaket 5' zu empfangen und weiterzuverarbeiten. Ist die übertragene Dienste-Nummer 15 nicht in der Datenbank 34 enthalten, bricht der Empfänger 2 den Empfang des Datenpakets 5' ab. Damit wird vermieden, dass Datenpakete empfangen werden, die nicht für den Empfänger 2 bestimmt sind. Ist die empfangene Dienste-Nummer 15 in der ersten Datenbank 34 enthalten wird der Empfang des Datenpakets 5' fortgesetzt. Der Vergleicher 31 prüft nun, ob die übertragene Dienste-Schlüsselnummer 16 in einer zweiten Datenbank 35 hinterlegt ist. Ist die Dienste-Schlüsselnummer 16 bekannt, wird der zu der Dienste-Schlüsselnummer 16 gehörige Dienste-Schlüssel 18 aus der zweiten Datenbank 35 ausgelesen. Die Entschlüsselungseinheit 28 verwendet den ausgelesenen Dienste-Schlüssel 18 zur Entschlüsselung des geheimen Teils 8 des Datenpakets 5'. Die entschlüsselte Dienste-Information 14 aus dem geheimen Teil 8 des Datenpakets 5' wird in einem zweiten Speicher 36 abgespeichert. Die Dienste-Information 14 steht damit dem Benutzer zur Verfügung und kann beispielsweise über ein Display 37 zur Anzeige gebracht werden.

Falls die übertragene Dienste-Schlüsselnummer 16 nicht in der zweiten Datenbank 35 enthalten ist, verwirft der Empfänger 2 das Datenpaket 5' und löscht es. Die empfangenen Informationen werden dann nicht im zweiten Speicher 36 abgespeichert.

Werden Dienste-Informationen 14 auf mehrere Datenpakete 5' verteilt, so enthält die Steuerinformation 11 einen entsprechenden Hinweis. Die Auswerteeinheit 29 stellt bei der Analyse der empfangenen Datenpakete 5' fest, ob es sich um ein mehrteiliges Datenpaket 5' handelt. Die einzelnen Datenpakete 5' werden von Empfänger 2 in der soeben beschriebenen Weise einzeln entschlüsselt. Wenn alle zugehörigen Teile der Dienst-Information 14 empfangen und entschlüsselt wurden, werden die Teile der Dienste-Information 14 von der Prozessoreinheit 27 zusammengesetzt, bevor die komplettierte Dienste-Information 14 im zweiten Speicher 36 abgespeichert wird und vom Benutzer im Display 37 auslesen werden kann.

Die Prozessoreinheit 27 prüft regelmäßig die Verfallszeit 17 der empfangenen Dienste-Information 14 auf Aktualität. Ist die Verfallszeit 17 einer Dienste-Information 14 abgelaufen wird die Dienste-Information 14 aus dem zweiten Speicher 36 gelöscht. Auf diese Weise wird sichergestellt, dass nur aktuelle Dienste-Informationen 14 im Empfänger 2 enthalten sind. Das Löschen der veralteten Dienste-Information 14 hat zudem den Vorteil, dass der Empfänger 2 mit einem recht geringen zweiten Speicher 36 auskommt.

Die in der ersten Datenbank 34 und in der zweiten Datenbank 35 abgespeicherten Dienste-Nummern 15 und Dienste-Schlüssel 18 mit zugehörigen Dienste-Schlüsselnummern 16 werden dem Empfänger 2 als Steuerbefehle 13 übermittelt. Da die Übermittlung der Steuerbefehle 13 in Datenpaketen 5 geschieht, deren geheimer Teil 8 mit dem geheimen Schlüssel 10 eines bestimmten Empfängers 2 verschlüsselt ist, kann eine sichere Übertragung der Dienste-Schlüssel 18 gewährleistet werden. Das Verschlüsselungsverfahren, mit dem die Steuerbefehle 13 verschlüsselt werden, beruht auf einer starken Verschlüsselung wie zum Beispiel Tripple DES oder "Blow-Fish". Eine solche Verschlüsselungsart mag rechnerisch aufwendig sein. Da aber lediglich die Steuerbefehle 13 auf diese Art verschlüsselt werden, die relativ selten übertragen werden müssen, kann die langsamere Verarbeitung zu Gunsten der erhöhten Sicherheit in Kauf genommen werden. Die übertragenen Dienste-Informationen 14, die der einzelne Empfänger 2 abonniert hat, werden auf eine einfache Art und Weise verschlüsselt. Diese Daten sind nicht derart sensibel, dass eine starke Verschlüsselung benutzt werden müsste. Hier kommt es eher auf eine schnelle Verarbeitung und schnelle Entschlüsselung innerhalb des Empfängers 2 an. Zur Erhöhung der Sicherheit kann der Dienste-Schlüssel 18 für bestimmte Arten von Dienste-Informationen regelmäßig erneuert werden und den entsprechenden Empfängern 2 übermittelt werden.

Ein weiterer Teil der Sicherheitsarchitektur besteht in der Uhr 32 des Empfängers 2. Die Uhr 32 kann ausschließlich über Steuerbefehle 13 gestellt oder verändert werden. Dazu wird regelmäßig vom Sender 1 die aktuelle Uhrzeit und das aktuelle Datum an die jeweiligen Empfänger 2 in Form eines verschlüsselten Steuerbefehls 13 übermittelt. Möglicherweise gefälschte Steuerbefehle 13 oder alte Dienste-Informationen 14 können auf diese Weise sicher erkannt werden, da sichergestellt ist, dass die Uhrzeit des Empfängers 2 stets aktuell ist.

Mit der vorliegenden Erfindung kann also eine standardisierte sichere Verteilung von beliebigen Informationen über schmalbandige Broadcast-Netze ermöglicht werden. Die Inhalte der übertragenen Datenpakete 5 sind vor Missbrauch von außen sicher. Die Übertragung von beliebigen, auch mittelgroßen Datenmengen sowie die Steuerung der Empfänger 2 geschieht auf sichere Weise. Sensible Daten, wie beispielsweise das An- bzw. Abschalten von Diensten und der dazu notwendige Transport von Dienste-Schlüsseln 18 geschieht auf sehr sichere Weise und kann praktisch mit den heute zur Verfügung stehenden Mitteln nicht innerhalb von kurzer Zeit von unberechtigten Dritten entschlüsselt werden. Eine länger dauernde Entschlüsselung ist jedoch nicht sinnvoll, da die übertragenen Dienste-Informationen 14 mit einer Verfallszeit 17 zusammengehören bzw. die Aktualität der übertragenen Steuerbefehle 13 durch die im geheimen Teil 8 des Datenpakets 5 übertragene Zeit 12 dadurch gesichert ist, dass nur aktuelle Steuerbefehle 13 vom Empfänger 2 weiterverarbeitet werden.

### Liste der Bezugszeichen

- 1: Sender
- 2: Empfänger
- 3: Dienste-Anbieter
- 4: Content-Gateway
- 5, 5': Datenpaket
- 6: Mehrwert-Information
- 7: Öffentlicher Teil
- 8: Geheimer Teil,
- 9,9',9": Öffentliche Schlüssel
- 10: Geheimer Schlüssel
- 11: Steuerinformation
- 12: Zeit
- 13: Steuerbefehl
- 14: Dienste-Information
- 15,15': Dienste-Nummer
- 16: Dienste-Schlüsselnummer
- 17: Verfallszeit
- 18: Dienste-Schlüssel
- 19: Verschlüsselungseinheit
- 20: Paketeinheit
- 21: Zuordnungseinheit
- 22: Teilnehmerverwaltung
- 23: Empfängerdatenbank
- 24: Dienste-Datenbank
- 25: Empfangseinheit
- 26: Analysator
- 27: Prozessoreinheit
- 28: Entschlüsselungseinheit
- 29: Auswerteeinheit
- 30: Schlüsselspeicher
- 31: Vergleicher
- 32: Uhr
- 33: Erster Speicher
- 34: Erste Datenbank
- 35: Zweite Datenbank
- 36: Zweiter Speicher
- 37: Display

## Patentansprüche

1. Verfahren zur Verbreitung einer Nachricht über wenigstens ein Broadcast-Netz, bei dem ein Sender (1) die Nachricht als mindestens ein Datenpaket (5, 5') aussendet und bei dem wenigstens ein Empfänger (2) das Datenpaket (5, 5') empfängt,
mit dem Schritt:
- Erzeugen des Datenpakets (5, 5') mit einem öffentlichen Teil (7) und mit wenigstens einem geheimen Teil (8),
wobei
- der geheime Teil (8) die Nachricht in verschlüsselter Form enthält,
- der geheime Teil (8) des Datenpakets (5) mit dem geheimen Schlüssel (10) von dem wenigstens einen bestimmten Empfänger (2) so verschlüsselt wird, dass die Nachricht nur von dem Empfänger (2) entschlüsselt werden kann, und
- jedem Empfänger (2) ein öffentlicher Schlüssel (9) und ein geheimer Schlüssel (10) zugeordnet ist;
**gekennzeichnet durch**
- Einfügen einer Information zur Verschlüsselung in den öffentlichen Teil (7) der Datenpakete (5, 5'), anhand derer ein Empfänger (2) auswählen kann, ob die Datenpakete (5, 5') von ihm weiterverarbeitet oder verworfen werden; und wenn die Nachricht ein Steuerbefehl (13) ist, **durch** die weiteren Schritte:
- Einfügen einer Steuerinformation (11) und eines öffentlichen Schlüssels (9) eines zugehörigen geheimen Schlüssels (10) in den öffentlichen Teil (7) des Datenpakets (5); und
- Einfügen einer Zeit (12), des öffentlichen Schlüssels (9) und des Steuerbefehls (13) in den geheimen Teil (8) des Datenpakets (5).

2. Verfahren nach Anspruch 1, **dadurch gekennzeichnet, dass** der geheime Schlüssel (10) und der öffentliche Schlüssel (9) aus der Seriennummer des Empfängers gebildet werden.

3. Verfahren für einen Empfänger zum Empfang von Nachrichten über wenigstens ein Broadcast-Netz, in dem wenigstens ein Sender (1) die Nachricht als wenigstens ein Datenpaket (5, 5') aussendet, mit den Schritten:
- Empfangen des Datenpakets (5, 5') mit wenigstens einem geheimen Teil (8), wobei der geheime Teil (8) die Nachricht in verschlüsselter Form enthält; und
- Weiterverarbeiten nur des Datenpakets (5, 5'), dessen Nachricht entschlüsselt werden kann;
**gekennzeichnet durch**
- Auslesen und Auswerten der im öffentlichen Teil (7) des Datenpakets (5) übertragenen Steuerinformation (11); und
- Erkennen anhand der Steuerinformation (11), wenn der geheime Teil (8) des Datenpakets (5) einen Steuerbefehl (13) als Nachricht enthält, und dann **durch** die weiteren Schritte:
- Vergleichen eines in einem öffentlichen Teil (7) des Datenpakets (5) übertragenen öffentlichen Schlüssels (9') mit einem bestimmten öffentlichen Schlüssel (9), wobei der bestimmte öffentliche Schlüssel (9) in dem bestimmten Empfänger (2) hinterlegt ist; und
- Entschlüsseln des geheimen Teils (8) des Datenpakets (5), wenn die öffentlichen Schlüssel (9, 9') identisch sind, wobei der geheime Teil (8) mit einem zu dem im öffentlichen Teil (7) übertragenen öffentlichen Schlüssel (9) korrespondierenden geheimen Schlüssel (10) entschlüsselt wird;
- Vergleichen des im geheimen Teil (8) des Datenpakets (5) vorhandenen öffentlichen Schlüssels (9") mit dem bestimmten öffentlichen Schlüssel (9);
- Vergleichen einer im geheimen Teil (8) übertragenen Uhrzeit (12) mit einer internen Uhrzeit des Empfängers (2);
- Speichern und Weiterverarbeiten der entschlüsselten Nachricht bei Identität der öffentlichen Schlüssel (9, 9") und bei Aktualität der übertragenen Uhrzeit (12).

4. Sender zum Verschlüsseln und Versenden mindestens einer Nachricht als wenigstens ein Datenpaket (5) in mindestens einem Broadcast-Netz mit wenigstens einem Empfänger (2), umfassend:
- eine Verschlüsselungseinheit (19) zur Verschlüsselung der Nachricht, so dass die Nachricht nur von einem bestimmten Empfänger (2) entschlüsselt werden kann;
- eine Paketeinheit (20) zur Erzeugung des Datenpakets (5) mit einem öffentlichen Teil (7) und mit einem geheimen Teil (8), wobei der geheime Teil (8) die verschlüsselte Nachricht umfasst und der öffentliche Teil (7) eine Information zur Verschlüsselung enthält, anhand derer der wenigstens eine Empfänger (2) auswählen kann, ob die Datenpakete (5) weiterverarbeitet oder verworfen werden;
**dadurch gekennzeichnet, dass**
- eine Empfängerdatenbank (23) vorgesehen ist, in der dem Empfänger (2) ein öffentlicher Schlüssel (9) und ein geheimer Schlüssel (10) zugeordnet ist; und
wenn die zu sendende Nachricht ein Steuerbefehl (13) ist,
- das Datenpaket (5) von der Paketeinheit (20) derart erzeugt wird, dass sein öffentlicher Teil (7) eine Steuerinformation (11) und den öffentlichen Schlüssel (9) des bestimmten Empfängers (2) enthält, und der geheime Teil (8) eine Zeit (12), den öffentlichen Schlüssel (9) und den Steuerbefehl (13) umfasst; und
- die Verschlüsselungseinheit (19) den geheimen Teil (8) des Datenpakets (5) mit dem zum öffentlichen Schlüssel (9) des Empfängers (2) gehörenden geheimen Schlüssel (10) verschlüsselt.

5. Empfänger zum Empfangen wenigstens einer Nachricht mindestens eines Broadcast-Netzes in Form von wenigstens einem Datenpaket (5, 5'), mit:
- einer Empfangseinheit (25) zum Empfangen des Datenpakets (5, 5'), das einen öffentlichen Teil (7) und einen geheimen Teil (8) umfasst, wobei der geheime Teil (8) eine Nachricht in verschlüsselter Form enthält;
- einem Analysator (26) zum Erkennen, ob die verschlüsselte Nachricht im geheimen Teil (8) des Datenpakets (5, 5') entschlüsselt werden kann; und
- einer Prozessoreinheit (27) zur Weiterverarbeitung der entschlüsselbaren Nachricht,
**gekennzeichnet durch**
- einen Schlüsselspeicher (30), in dem ein Schlüsselpaar, bestehend aus einem geheimen Schlüssel (10) und einem öffentlichen Schlüssel (9) hinterlegt ist;
- einen Vergleicher (31) zum Vergleichen des übertragenen öffentlichen Schlüssels (9') im öffentlichen Teil (7) des Datenpakets (5) mit dem öffentlichen Schlüssel (9) im Schlüsselspeicher (30);
- eine Entschlüsselungseinheit (28) zum Entschlüsseln der verschlüsselten Nachricht im geheimen Teil (8) des Datenpakets (5) mit dem geheimen Schlüssel (10) des Empfängers (2) bei Identität des öffentlichen Schlüssel (9) aus dem Schlüsselspeicher (30) und des übertragenen öffentlichen Schlüssels (9');
- eine Auswerteeinheit (29) zur Auswertung einer übertragenen Steuerinformation (11) im öffentlichen Teil (7) des Datenpakets (5) und zum Erkennen eines Steuerbefehls (13) im geheimen Teil (8) des Datenpakets (5),
- eine Uhr (32) zur Feststellung der Aktualität der übertragenen Nachricht anhand einer Uhrzeit (12) im geheimen Teil (8) des Datenpakets (5); und
- einen ersten Speicher (33) zur Speicherung der entschlüsselten Nachricht bei Aktualität der übertragenen Uhrzeit (12).

## Claims

1. Method of distributing a message over at least one broadcast network, in which a transmitter (1) transmits the message as at least one data packet (5, 5') and in which a receiver (2) receives the data packet (5, 5'); with the step:
- producing the data packet (5, 5') with a public portion (7) and with at least one private portion (8),
wherein
- the private portion (8) contains the message in encrypted form,
- the private portion (8) of the data packet (5) is encrypted by the at least one specific receiver (2) with the private key (10) so that the message can only be decrypted by the receiver (2), and
- a public key (9) and a private key (10) is assigned to each receiver (2);
**characterised by**
- insertion of an information item for encrypting into the public portion (7) of the data packets (5, 5') with the aid of which a receiver (2) can select whether the data packets (5, 5') are to be further processed by it or discarded; and
when the message is a control command (13), by the following steps:
- insertion of a control information item (11) and a public key (9) of an appertaining private key (10) into the public portion (7) of the data packet (5); and
- insertion of a time (12), the public key (9) and the control command (13) into the private portion (8) of the data packet (5).

2. Method as claimed in Claim 1, **characterised in that** the private key (10) and the public key (9) are formed from the serial number of the receiver.

3. Method for a receiver for receiving messages over at least one broadcast network, in which at least one transmitter (1) transmits the message as at least one data packet (5, 5'), with the steps:
- receiving the data packet (5, 5') with at least one private portion (8), wherein the private portion (8) contains the message in encrypted form; and
- further processing of only the data packet (5, 5') of which the message can be decrypted;
**characterised by**
- readout and evaluation of the control information (11) transmitted in the public portion (7) of the data packet (5); and
- recognising with the aid of the control information (11) when the private portion (8) of the data packet (5) contains a control command (13) as a message,
and then by the further steps:
- comparing a public key (9') transmitted in a public portion (7) of the data packet (5) with a specific public key (9), wherein the specific public key (9) is stored in the specific receiver (2); and
- decrypting the private portion (8) of the data packet (5) when the public keys (9, 9') are identical, wherein the private portion (8) is decrypted with a private key (10) corresponding to the public key (9) transmitted in the public portion (7);
- comparing the public key (9") present in the private portion (8) of the data packet (5) with the specific public key (9);
- comparing a time code (12) transmitted in the private portion (8) with an internal time code of the receiver (2);
- storing and further processing the decrypted message when the public keys (9, 9") are identical and when the transmitted time code (12) matches the current time.

4. Transmitter for encrypting and transmitting at least one message as at least one data packet (5) in at least one broadcast network with at least one receiver (2), comprising:
- an encryption unit (19) for encrypting the message, so that the message can be decrypted only by a specific receiver (2);
- a packet unit (20) for producing the data packet (5) with a public portion (7) and a private portion (8), wherein the private portion (8) comprises the encrypted message and the public portion (7) contains an information item for encryption with the aid of which the at least one receiver (2) can select whether the data packets (5) are further processed or discarded;
**characterised in that**
- a receiver data base (23) is provided in which a public key (9) and a private key (10) is assigned to the receiver (2); and
when the message to be sent is a control command (13)
- the data packet (5) is generated by the packet unit (20) in such a way that the public portion (7) thereof contains a control information item (11) and the public key (9) of the specific receiver (2), and the private portion (8) comprises a time (12), the public key (9) and the control command (13); and
- the encryption unit (19) encrypts the private portion (8) of the data packet (5) with the private key (10) belonging to the public key (9) of the receiver (2).

5. Receiver for receiving at least one message of at least one broadcast network in the form of at least one data packet (5, 5'), with:
- a receiving unit (25) for receiving the data packet (5, 5') which contains a public portion (7) and a private portion (8), wherein the private portion (8) contains a message in encrypted form;
- an analyser (26) for recognising whether the encrypted message in the private portion (8) of the data packet (5, 5') can be decrypted; and
- a processor unit (27) for further processing of the decryptable message,
**characterised by**
- a key memory (30) in which a pair of keys consisting of a private key (10) and a public key (9) is stored;
- a comparator (31) for comparing the transmitted public key (9') in the public portion (7) of the data packet (5) with the public key (9) in the key memory (30);
- a decryption unit (28) for decrypting the encrypted message in the private portion (8) of the data packet (5) with the private key (10) of the receiver (2) when the public key (9) from the key memory (30) is identical to the transmitted public key (9');
- an evaluation unit (29) for evaluating a transmitted control information item (11) in the public portion (7) of the data packet (5) and for recognising a control command (13) in the private portion (8) of the data packet (5),
- a clock (32) for establishing that the transmitted message is current with the aid of a time code (12) in the private portion (8) of the data packet (5); and
- a first memory (33) for storing the decrypted message when the transmitted time code (12) matches the current time.

## Revendications

1. Procédé de diffusion d'un message sur au moins un réseau de diffusion, dans lequel un émetteur (1) émet le message sous forme d'au moins un paquet de données (5, 5') et dans lequel au moins un récepteur (2) reçoit le paquet de données (5, 5'), comprenant l'étape de :
- génération du paquet de données (5, 5') avec une partie publique (7) et avec au moins une partie confidentielle (8),
- dans lequel la partie confidentielle (8) comporte le message sous forme chiffrée,
- la partie confidentielle (8) du paquet de données (5) est chiffrée avec la clé confidentielle (10) du au moins un récepteur (2) déterminé de sorte que le message ne puisse être déchiffré que par le récepteur (2), et
- une clé publique (9) et une clé confidentielle (10) sont associées à chaque récepteur (2),
**caractérisé par**
- l'insertion d'une information pour le chiffrement dans la partie publique (7) des paquets de données (5, 5') à l'aide de laquelle un récepteur (2) peut sélectionner si les paquets de données (5, 5') sont traités ou rejetés par lui, et
lorsque le message est une instruction de contrôle (13), par les étapes suivantes :
- insertion d'une information de commande (11) et d'une clé publique (9) d'une clé confidentielle (10) correspondante dans la partie publique (7) du paquet de données (5), et
- insertion d'une heure (12) de la clé publique (9) et de l'instruction de contrôle (13) dans la partie confidentielle (8) du paquet de données (5).

2. Procédé suivant la revendication 1, **caractérisé en ce que** la clé confidentielle (10) et la clé publique (9) sont formées à partir du numéro de série du récepteur.

3. Procédé pour un récepteur destiné à la réception de messages sur au moins un réseau de diffusion, dans lequel au moins un émetteur (1) émet le message sous forme d'au moins un paquet de données (5, 5'), comprenant les étapes de :
- réception du paquet de données (5, 5') avec au moins une partie confidentielle (8), la partie confidentielle (8) comportant le message sous forme chiffrée, et
- traitement du seul paquet de données (5, 5') dont le message peut être déchiffré,
**caractérisé par**
- la lecture et l'évaluation de l'information de commande (11) transmise dans la partie publique (7) du paquet de données (5), et
- l'identification, à l'aide de l'information de commande (11), du fait que la partie confidentielle (8) du paquet de données (5) comporte une instruction de contrôle (13) en tant que message,
et ensuite par les étapes suivantes :
- comparaison d'une clé publique (9') transmise dans une partie publique (7) du paquet de données (5) avec une clé publique (9) déterminée, la clé publique déterminée (9) étant mise en mémoire dans le récepteur déterminé (2), et
- déchiffrement de la partie confidentielle (8) du paquet de données (5) lorsque les clés publiques (9, 9') sont identiques, la partie confidentielle (8) étant alors déchiffrée avec une clé confidentielle (10) correspondant à la clé publique (9) transmise dans la partie publique (7),
- comparaison de la clé publique (9") disponible dans la partie confidentielle (8) du paquet de données (5) avec la clé publique déterminée (9),
- comparaison d'une heure (12) transmise dans la partie confidentielle (8) avec une heure interne du récepteur (2),
- mémorisation et traitement du message déchiffré en cas d'identité des clés publiques (9, 9'') et d'actualité du temps transmis (12).

4. Émetteur pour le chiffrement et l'envoi d'au moins un message sous forme d'au moins un paquet de données (5) sur au moins un réseau de diffusion avec au moins un récepteur (2), comprenant :
- une unité de chiffrement (19) pour chiffrer le message de sorte que le message ne puisse être déchiffré que par un récepteur déterminé (2),
- une unité d'élaboration de paquets (20) pour générer le paquet de données (5) avec une partie publique (7) et avec une partie confidentielle (8), la partie confidentielle (8) comprenant le message chiffré et la partie publique (7) comprenant une information pour le chiffrement à l'aide de laquelle le au moins un récepteur (2) peut sélectionner si les paquets de données (5) sont traités ou rejetés,
**caractérisé en ce que**
- il est prévu une banque de données (23) du récepteur dans laquelle une clé publique (9) et une clé confidentielle (10) sont associées au récepteur (2), et,
lorsque le message à émettre est une instruction de contrôle (13),
- le paquet de données (b) est généré par l'unité d'élaboration de paquets (20) de telle sorte que sa partie publique (7) comporte une information de commande (11) et la clé publique (9) du récepteur déterminé (2), et la partie confidentielle (8) comporte une heure (12), la clé publique (9) et l'instruction de contrôle (13), et
- l'unité de chiffrement (19) chiffre la partie confidentielle (8) du paquet de données (5) avec la clé confidentielle (10) correspondant à la clé publique (9) du récepteur (2).

5. Récepteur pour la réception d'au moins un message d'au moins un réseau de diffusion sous forme d'au moins un paquet de données (5, 5'), comprenant
- une unité de réception (25) pour la réception du paquet de données (5, 5') qui comprend une partie publique (7) et une partie confidentielle (8), la partie confidentielle (8) comportant un message sous forme chiffrée,
- un analyseur (26) pour identifier si le message chiffré dans la partie confidentielle (8) du paquet de données (5, 5') peut être déchiffré, et
- une unité de processeur (7) pour le traitement du message déchiffrable,
**caractérisé par**
- une mémoire de clés (30), dans laquelle est mise en mémoire une paire de clés constituée d'une clé confidentielle (10) et d'une clé publique (9),
- un comparateur (31) pour comparer la clé publique (9') transmise dans la partie publique (7) du paquet de données (5) avec la clé publique (9) dans la mémoire de clés (30),
- une unité de déchiffrement (28) pour déchiffrer le message chiffré dans la partie confidentielle (8) du paquet de données (5) avec la clé confidentielle (10) du récepteur (2) en cas d'identité de la clé publique (9) de la mémoire de clés (30) et de la clé publique (9') transmise,
- une unité d'évaluation (29) pour évaluer une information de commande (11) transmise dans la partie publique (7) du paquet de données (5) et pour identifier une instruction de contrôle (13) dans la partie confidentielle (8) du paquet de données (5),
- une horloge (32) pour établir l'actualité du message transmis avec une heure (12) dans la partie confidentielle (8) du paquet de données (5), et
- une première mémoire (33) pour mémoriser le message déchiffré en cas d'actualité de l'heure transmise (12).
